# EUROPÄISCHE PATENTSCHRIFT

(11) **EP 1 592 218 B1**
(45) Veröffentlichungstag und Bekanntmachung des Hinweises auf die Patenterteilung: **03.10.2007**
(21) Anmeldenummer: 04010392.1
(22) Anmeldetag: 01.05.2004
(51) Int. Cl.: H04M 7/00

(54) **Verfahren für das Tone Disabling in einem Media Gateway und Media Gateway**
Method for tone disabling in a media gateway and media gateway
Méthode pour la désactivation de tonalité dans une passerelle de média et passerelle de média

(43) Veröffentlichungstag der Anmeldung: 02.11.2005
(73) Patentinhaber: Siemens Schweiz AG, 8047 Zürich (CH)
(72) Erfinder: Goldstein, Peter, 8800 Thalwil (CH)
(74) Vertreter: Kley, Hansjörg

(56) Entgegenhaltungen:
- WO-A-02/21780
- US-A1- 2003 185 222

## Beschreibung

Die vorliegende Erfindung betrifft ein Verfahren für das Tone Disabling in einem Media Gateway gemäss dem Oberbegriff des Patentanspruchs 1 und ein Media Gateway gemäss Patentanspruch 8.

Im folgenden wird anstelle einer deutschen Nichtfachsprache die englisch-sprachige Nomenklatur aus den Normen der ITU-T und der IETF benutzt, wie z.B. «Media Gateway», «Tone Disabler» oder «Tone Disabling». Dadurch lassen sich Unklarheiten vermeiden. Eine Liste der verwendeten Abkürzungen und Begriffe am Schluss dieses Dokumentes ist integraler Bestandteil dieser Schrift.

Die vorliegende Erfindung betrifft das Gebiet der FAX/Modem-Daten-Übermittlung im Sprachband und des Sprachverkehrs. Ein TDM-basiertes leitungsvermitteltes Netz wie z.B. ISDN bietet eine sehr hohe Dienstqualität. Die Netzbetreiber setzen im sogenannten Backbone-Netz wie auch im Zugangsnetz (auch Access-Netz genannt) zunehmend auch für Echtzeitanwendungen, wie z.B. Sprache und Daten im Sprachband, ein IP-basiertes paketvermitteltes Netz ein. Ein Gateway ermöglicht die Umsetzung TDM ←→ IP beziehungsweise POTS ←→ IP.

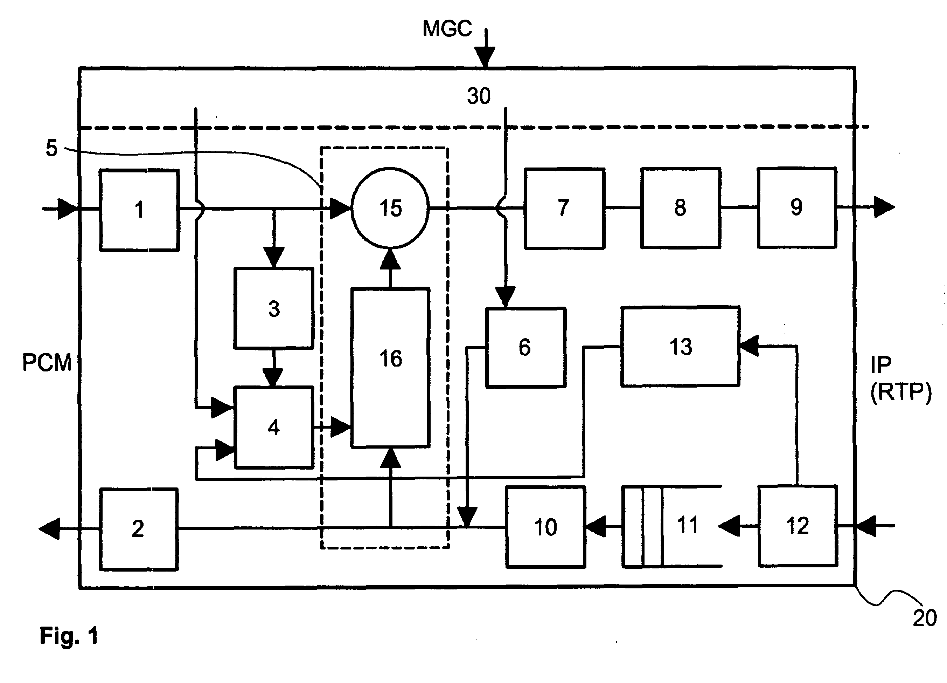

Eine typische Konfiguration eines Media Gateways zeigt Figur 1. Die Verbindung zwischen einem leitungsvermittelten Netz TDM und einem paketvermittelten Netz IP (RTP) wird für die Nutzinformation (z.B. Sprache, Fax/Modem-Daten) durch ein Media Gateway 20 realisiert. Dadurch, dass ein Teil der Übertragungsstrecke mit einem paketvermittelten Netz realisiert wird, ist die Übertragung von Ein- und Mehrfrequenzinband-Signalen im allgemeinen ohne weitere Massnahmen nicht gewährleistet.

Fax- und Modem-Verbindungen werden beim Verbindungsaufbau durch die Netzknoten (Verbindungskontroll-Logik, Echokontroll-Logik) in der Regel wie Sprachverbindungen behandelt. Bei vorhandenen Echoquellen und Laufzeiten >20ms werden Echounterdrückungseinrichtungen (z.B. Echokompensatoren) in die Verbindung eingefügt. Faxmodems mit integrierter Echokompensation deaktivieren die netzseitig bereitgestellten Echokompensatoren durch Verwendung des sog. Disabling Tones (2100 Hz, mit Phasensprung) als Antwortsignal vom gerufenen zum rufenden Faxgerät. In den netzseitigen Echokompensatoren ist somit ein sogenannter Tone Disabler oder eine Tone Disabling Funktion zu integrieren. Da der Disabling Tone nur vom gerufenen Faxgerät in Richtung rufendem Faxgerät gesendet wird, müssen die Echokompensatoren diesen Disabling Tone sowohl auf dem Sende- als auch auf dem Empfangspfad erkennen können. Dieses Erfordernis führt zu folgenden Schwierigkeiten:
i) Auf IP basierende Transportnetze können wegen Paketverlusten, Jitterbuffer Manipulationen oder Verwendung von Low Bit Rate Codecs, diesen Disabling Ton nicht einwandfrei übertragen.
ii) Der Wechsel zwischen Sprache und Fax innerhalb ein und derselben Verbindung erfordert im Media Gateway einen Tone Disabler, der den Disabling Tone auch von der IP-Seite für die Deaktivierung des Echokompensators während der Fax-Uebertragung und auch das Ende der Fax-Übermittlung (z.B. durch Pegelbewertung) erkennt und damit den Echokompensator für die ggf. folgende Sprachübermittlung reaktiviert.
iii)Der Disabling Tone (Antwortsignal) muss bis zum rufenden Faxgerät gesendet werden, damit weitere ev. vorhandene Echokompensatoren den Disabling Tone bewerten können.

Die vorstehend in ii) aufgeführte Anforderung ist insbesondere im Kontext für eine vertrauliche Faxübermittlung zu sehen. Vom A-Teilnehmer wird zunächst eine Sprachverbindung zu einem Standort mit Faxgerät aufgebaut und der A-Teilnehmer vergewissert sich über eine Konversation, dass der antwortende B-Teilnehmer beim Faxgerät genau jene Person ist, die zur Entgegennahme einer Faxmitteilung berechtigt ist. Wird dies festgestellt, wird vom A-Teilnehmer in der gleichen Verbindung das Faxgerät aktiviert und die Faxmitteilung auf die bekannte Weise im Sprachband übermittelt.

Bisher wurden die unter i) bis iii) aufgeführten Schwierigkeiten wie folgt gelöst:
1. Die Ein- und Mehrfrequenz-Signale werden nicht über das IP-Netz als Nutzinformation übertragen, sondern via Signalisierung gemäss MGCP RFC 3435 oder Megaco RFC 3525/H.248.
2. Im Dokument RFC2833 ist ein Verfahren beschrieben, bei dem das Media Gateway die Ein-und Mehrfrequenz-Signale nicht als Audio-Signal über IP transportiert, sondern auf der TDM-Seite erkennt und wie folgt überträgt:
   a) als kodierte Ton/Signal-Info (z.B. Bedeutung, Signalstärke, Dauer) oder
   b) als Ereignis (z.B. Wählton = 66, vgl. RFC 2833).

Die bekannten Implementationen benützen den Disabling Tone nur zum Deaktivieren des Echokompensators. Dies hat folgende Konsequenzen:
i) dies entspricht nicht dem Tone Disabling (sondern dem Extern Disabling) und
ii) dies beinhaltet nicht das Senden des Disabling Tones.

In der Veröffentlichung WO 02/21780 A1 (VXTEL, Inc; «Integrated telecommunicatons processor for packet networks») ist ein zwischen einem leitungsvermitteltem und einem paketvermittelten Netz eingefügte Media Gateway offenbart, das keine «Tone Detection Function» im Empfangspfad IP --> TDM aufweist. In diesem Media Gateway ist auch kein externes «Tone Disabling» möglich.

Der vorliegenden Erfindung liegt daher die Aufgabe zugrunde, ein Verfahren für das Tone Disabling in einem Media Gateway und ein Media Gateway zur Durchführung des Verfahrens anzugeben, bei denen die vorstehend aufgeführten Nachteile der bekannten Implementationen bei der Übertragung von Daten im Sprachband unabhängig von der angewandten Methode (Inband als Media-Stream oder gemäss RFC 2833 im Outband via Signalisierung) vermieden werden, um im Vergleich zu einem reinem TDM-Netz eine gleichwertige Funktionalität zu erreichen. Diese gleichwertige Funktionalität ist zwingend notwendig, um den FAX- und Datendienste in allen ihren Ausprägungen auch dann zu ermöglichen, wenn Teile des Transportnetzes als paketvermittelte Netze wie z.B. ein IP-Netz ausgebildet sind.

Diese Aufgabe wird erfindungsgemäss durch das im Patentanspruch 1 angegebene Verfahren und durch den in Patentanspruch 8 angegebenen Media Gateway gelöst.

Vorteilhafte Ausgestaltungen der Erfindung sind in weiteren Ansprüchen angegeben.

Gemäss dem erfindungsgemässen Verfahren, wonach
- für jede Verbindung in Richtung zum paketvermitteltem Netz ein Tone Disabler zur Deaktivierung des Echokompensators vorgesehen ist und dass
- für jede Verbindung in Richtung zum leitungsvermittelten Netz mit der im Payload-Analyzer ausgewerteten kodierten Signal-Information ein Tongenerator (60) zur Erzeugung eines Disabling Tones angesteuert wird und ein weiterer Tone Disabler dem Tongenerator nachgeschaltet ist, um den Echokompensator zu deaktivieren;
wird in Richtung des leitungsvermittelten Netzes TDM das Ton Disabling korrekt vorgenommen und tatsächlich auch ein Disabling Ton ausgesendet. Dies ist von besonderer Bedeutung, da auf diese Weise innerhalb der ein und der selben Verbindung ein Wechsel von Sprache auf Daten oder umgekehrt sichergestellt ist.

Ein Ausführungsbeispiel der Erfindung wird nachfolgend anhand der Zeichnungen näher erläutert. Dabei zeigen:
- Figur 1: Media Gateway mit einem gemäss dem Stand der Technik gesteuerten Echokompensator;
- Figur 2: Media Gateway mit einem gemäss der vorliegenden Erfindung gesteuerten Echokompensator.

Es wird angenommen, dass das IP-Netz eine gewisse Paketverlustwahrscheinlichkeit übersteigt oder der zur Anwendung vorgesehene Codierer/Decodierer für den Transport von Ein- oder Mehrfrequenzsignalen nicht geeignet ist. Dazu wird für die Übertragung von Tönen/Signalen der Standard RFC2833 angewendet.

Figur 1 zeigt ein Media Gateway 20 gemäss dem Stand der Technik, das zwischen einem leitungsvermittelten Netz, z.B. TDM oder POTS und einem paketvermittelten Netz IP angeordnet ist. Der Echokompensator 5 wird von einer externen Echokompensationssteuerung 4 aktiviert bzw. deaktiviert («enable» / «disable»). Die externen Quellen bzw. Information zur Steuerung des Echokompensators entstammen dabei einem Media Gateway Controller MGC oder der «kodierten Signal-Information» mit Ursprung paketvermitteltes Netz IP. Diese «kodierte Signal-Information» wird im Analyzer 13 (Payload Analyzer RFC 2833) bewertet und daraus das Deaktivierungssignal abgeleitet. Im RTP-Decoder 12 erfolgt vorgängig eine Separation von Nutz- und Signal(RFC 2833)-paketen. In Fig. 1 sind die weiteren üblichen Komponenten eines Media Gateways 20 wie folgt dargestellt, nämlich :
Decoder 1
   Der Decoder 1 überführt TDM-basierte gemäss G.711 codierte Nutzsignale in eine lineare Darstellung.
Sprachaktivitätsdetektor 7
   Der Sprachaktivitätsdetektor erkennt Sprachpausen und ist nur während einer Sprachkommunikation aktiv.
Encoder 8
   Die Information wird im Encoder 8 entsprechend des aktuellen Kodierverfahrens codiert.
RTP-Encoder 9
   Paketiert und besorgt den Transport der codierten Information.
RTP-Decoder 12
   Depaketisiert die via RTP übertragene Information.
Payload Analyzer 13
   Erkennt und analysiert die Information, der Payload Type besagt, dass es sich um audio, text, etc. handelt, nicht aber welches Signal.
Jitter Buffer 11
   speichert die eintreffenden IP-Pakete und gleicht die durch das IP-Netz verursachten unterschiedlichen Laufzeiten der IP-Pakete aus.
Decoder 10
   decodiert, d.h. erstellt die lineare Darstellung der codierte Nutzinformation, z.B. gemäss G.711, G.7xx.
Tondetektor 3
   Ein Tondektor (2100Hz mit/ohne Phasensprung) erkennt, dass eine Datenverbindung im Sprachkanal ansteht.
Tongenerator 6
   Der Tongenerator 6 erzeugt die üblichen DTMF- und vermittlungstechnischen Töne. Die Information zur Erzeugung vorgenannter bestimmter Töne entnimmt der Tongenerator 6 z.B. einer Tabelle.

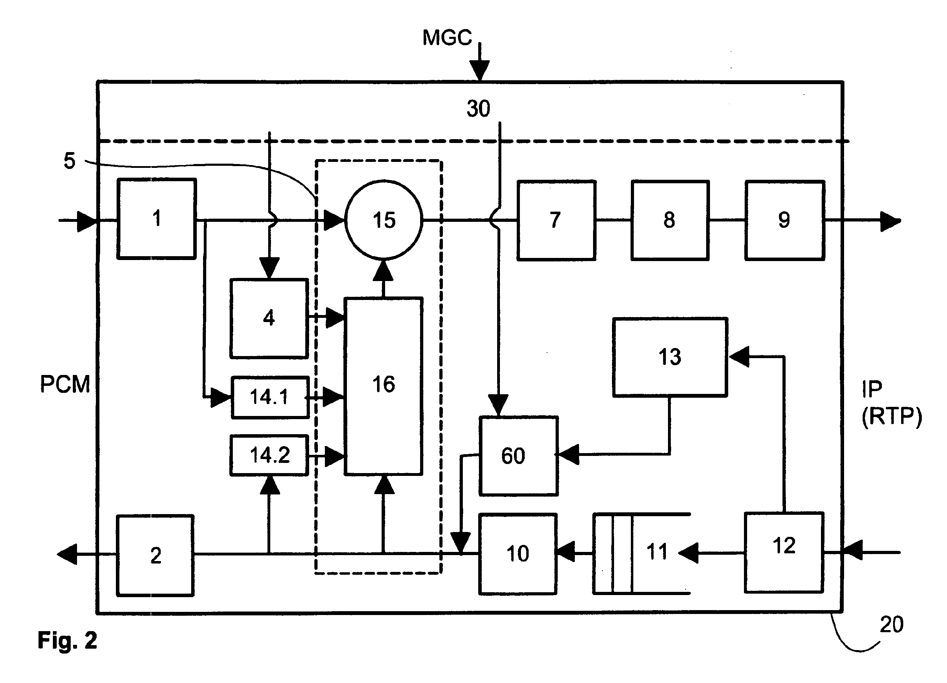

Es wird nun eine Verbindung zwischen zwei Faxgeräten betrachtet und wobei die Verbindung über ein erfindungsgemässes Media Gateway 20 geführt ist. Dazu wird im folgenden auf die Figur 2 Bezug genommen. Dieses erfindungsgemässe Media Gateway 20 unterscheidet sich in der Richtung leitungsvermitteltes Netz TDM→ paketvermitteltes Netz IP vom Stand der Technik dadurch, dass nicht bloss ein Tondetektor 3, sondern ein Tone Disabler 14.1 eingesetzt ist.

Gegenüber dem Stand der Technik ist im erfindungsgemässen Media Gateway 20 zudem ein Tongenerator 60 vorgesehen, der mit dem Payload Analyzer 13 verbunden ist: Wird nun über den Payload Analyzer 13 des hier betrachteten Media Gateways 20 der Disabling Tone erkannt, wird in demselben der Tongenerator 60 zum Aussenden (in weiterführender Richtung zum TDM-Netz) dieses Tones veranlasst. Gemäss dem Standard ITU-T Rec. G.168 weist dieser Ton eine Frequenz von f = 2100 Hz (für das Deaktivieren von Echosperren) und ggf. einen Phasensprung (für das Deaktivieren von Echosperren und Echokompensatoren) auf. Damit können eventuell weiter sich in der Verbindung, d.h. TDM-seitig befindliche Echokompensatoren den Disabling Ton erkennen. Ein nun im Media Gateway 20 zusätzlich eingefügter Tone Disabler 14.2 erkennt den Disabling Tone und der Echokompensator 5 wird dadurch für die Dauer der Fax-Übertragung deaktiviert (= «disablen»). Am Ende der Fax-Übertragung wird das Ton Disabling beendet, so dass der Echokompensator 5 wieder den über das externe Disabling angezeigten Zustand einnehmen kann. Dieses externe Disabling erfolgt durch die Übermittlung der entsprechend Steuerinformation vom Media Gateway Controller MGC über die Media Gateway-interne Steuerung 30 zur Echokompensationssteuerung 4.

Eine im Ton Disabler 14.1/14.2 enthaltene Signalpegel-Bewertung erlaubt das Erkennen des Endes der Fax-Übermittlung. Dadurch ist in der gleichen Verbindung einer Sprachkomunikation mit aktivierter Echokompensation sichergestellt.

Immer dann, wenn von einer Sprachkommunikation auf Datenkommunikation (wie z.B. FAX- oder Modem-Betrieb) übergegangen wird, erfolgt das Tone Disabling, welches sich automatisch beendet, wenn wieder auf Sprache gewechselt wird. Eine dazwischen liegende Pause kennzeichnet dabei das Ende der Datenübertragung.

In der Darstellung gemäss der Figur 2 sind zwei Tone Disabler 14.1 und 14.2 vorgesehen. In einer konkreten Implementation kann jedoch ein einziger Tone Disabler 14 mit zwei entsprechenden Eingängen vorgesehen sein.

### Liste der verwendeten Bezugszeichen

- 1: Decoder (G.711→ linear)
- 2: Encoder (linear -> G.711)
- 3: Tondetektor für 2100 Hz, mit/ohne Phasensprung
- 4: Externe Echokompensationssteuerung, enable/disable
- 5: Echokompensator
- 6: Tongenerator
- 7: Sprachaktivitätsdetektor
- 8: Encoder (linear -> G.711)
oder
low bit rate encoder, z.B. (linear → G.723 oder linear → G.729)
- 9: Real Time Protocol encoder; RTP-Encoder
- 10: Decoder (G.711 -> linear)
oder
low bit rate decoder, z.B. (G.723 → linear oder G.729 -> linear)
- 11: Jitter Buffer
- 12: Real Time Protocol decoder; RTP-Decoder
- 13: Payload Analyzer RFC 2833
- 14.1: Tone Disabler für 2100 Hz mit/ohne Phasensprung
- 14.2: Tone Disabler für 2100 Hz mit/ohne Phasensprung
- 15: Subtrahierer zur Subtraktion des geschätzten Echos
- 16: Adaptives Filter
- 20: Media Gateway
- 30: Media Gateway-interne Steuerung
- 60: Tongenerator, erzeugt auch den Disabling Tone 2100 Hz mit/ohne Phasensprung

### Liste der verwendeten Abkürzungen

- DTMF: Dual Tone Modulation Frequency
- IETF: Internet Engineering Task Force
- IP: Internet Protocol
- ISDN: Integrated Services Digital Network
- ITU: International Telecommunication Union
- ITU-T: Telecommunication Standardization Sector of ITU
- MGC: Media Gateway Controller
- POTS: Plane Old Telephone System
- PSTN: Public Switched Telecommunication Network
- RTP: Real Time Protocol
- TDM: Time Division Multiplex

### Literaturverzeichnis

ITU-T Rec. G.168
   Digital network echo cancellers (6/2002)
ITU-T G.711
   Pulse Code Modulation (PCM) of voice frequencies
ITU-T G.723
   Speech codecs: Dual rate speech codec for multimedia communications transmitting at 5.3 and 6.3 kBit/s.
ITU-T G.729
   Coding of speech at 8 kBit/s using CS-CELP
ITU-T H.248.1
   Gateway control protocol: Version 2
RFC 2833
   - Network Working Group: H. Schulzrinne
   - Request for Comments: 2833: Columbia University
   - Category: Standards Track: S. Petrack
   MetaTel
   May 2000
   RTP Payload for DTMF Digits, Telephony Tones and Telephony Signals
RFC 3525
   - Network Working Group: C. Groves
   - Request for Comments: 3525: M. Pantaleo
   - Obsoletes: 3015: LM Ericsson
   - Category: Standards Track: T. Anderson
   Consultant
   T. Taylor
   Nortel Networks
   Editors
   June 2003
   Gateway Control Protocol Version 1
RFC 3435
   - Network Working Group: F. Andreasen
   - Request for Comments: 3435: B. Foster
   - Obsoletes: 2705: Cisco Systems
   - Category: Informational: January 2003
   Media Gateway Control Protocol (MGCP) Version 1.0

## Patentansprüche

1. Verfahren für das Tone Disabling für einen in einem zwischen einem leitungsvermitteltem (TDM) und einem paketvermittelten Netz (IP) eingefügten Media Gateway (20) enthaltenen Echokompensator (5), wobei über das Media Gateway (20) Sprache und Daten im Sprachband geführt werden, wobei:
- für jede Verbindung in Richtung zum paketvermitteltem Netz (IP) der Disabling Ton detektiert (3) als Information zu einer im Media Gateway (20) angeordneten Echokompensationssteuerung (4) übertragen wird;
- für jede Verbindung in Richtung zum leitungsvermittelten Netz (TDM) ein im Media Gateway (20) angeordneter Payload-Analyzer (13) vorgesehen ist, um kodierte Signal-Information zur Deaktivierung dem Echokompensator (5) der Echokompensationssteuerung (4) zuzuführen;
**dadurch gekennzeichnet, dass**
- für jede Verbindung in Richtung zum paketvermitteltem Netz (IP) ein im Media Gateway (20) angeordneter Tone Disabler (14.1) zur Deaktivierung des Echokompensators (5) vorgesehen ist und dass
- für jede Verbindung in Richtung zum leitungsvermittelten Netz mit der im Payload-Analyzer (13) ausgewerteten kodierten Signal-Information ein Tongenerator (60) zur Erzeugung eines Disabling Tones angesteuert wird und ein weiterer im Media Gateway (20) angeordneter Tone Disabler (14.2) dem Tongenerator (60) nachgeschaltet ist, um den Echokompensator (5) zu deaktivieren.

2. Verfahren nach Anspruch 1,
**dadurch gekennzeichnet, dass**
der Tongenerator (60) neben den DTMF- und vermittlungstechnischen Tönen auch den Disabling Tone erzeugt.

3. Verfahren nach Anspruch 2,
**dadurch gekennzeichnet, dass**
der vom Tongenerator (60) erzeugte Disabling Tone eine Frequenz f = 2100 Hz aufweist.

4. Verfahren nach einem der Ansprüche 1 bis 3,
**dadurch gekennzeichnet, dass**
die Tone Disabler (14.1, 14.2) zur Steuerung des Echokompensators (5) eine Signalpegel-Bewertung vornehmen und damit selbständig das Ende der Datenübertragung erkennen.

5. Verfahren nach einem der Ansprüche 1 bis 4,
**dadurch gekennzeichnet, dass**
der Tone Disabler (14.1) und der weitere Tone Disabler (14.2) als eine einzige Einheit ausgebildet sind.

6. Verfahren nach einem der Ansprüche 1 bis 5,
**dadurch gekennzeichnet, dass**
für die Dauer einer Datenverbindung der Echokompensator (5) deaktiviert ist und dass am Ende einer Datenverbindung der Echokompensator (5) in den zu Beginn der Datenverbindung befindlichen Zustand, wie von der externen Echokompensationssteuerung (4) angezeigt, zurückgestellt wird.

7. Verfahren nach einem der Anspruch 6,
**dadurch gekennzeichnet, dass**
innerhalb einer Verbindung durch das Tone Disabling ein Wechsel von Sprache auf Daten erfolgt.

8. Media Gateway (20), das zwischen einem leitungsvermitteltem Netz (TDM) und einem paketvermittelten Netz (IP) eingefügt ist, mit Mitteln (13, 14.1, 14.2, 60) zur Durchführung des Verfahrens gemäss einem der Patentansprüche 1 bis 7.

## Claims

1. Method for tone disabling for an echo compensator (5) contained in a media gateway (20) inserted between a circuit-switched (TDM) and a packet-switched network (IP), with voice and data being routed in the voice band by way of the media gateway (20), whereby
- for each connection in the direction of the packet-switched network (IP), the disabling tone is detected (3) and is transmitted as information relating to an echo compensation controller (4) arranged in the media gateway (20),
- for each connection in the direction of the circuit-switched network (TDM), a payload analyser (13) arranged in the media gateway (20) is provided in order to convey encoded signal information for deactivation to the echo compensator (5) of the echo compensation controller (4),
**characterised in that**
- for each connection in the direction of the packet-switched network (IP), a tone disabler (14.1) arranged in the media gateway (20) is provided to deactivate the echo compensator (5) and that
- for each connection in the direction of the circuit-switching network with the encoded signal information evaluated in the payload analyser (13), a tone generator (6) for generating a disabling tone is activated, and a further tone disabler (14.2) arranged in the media gateway (20) is arranged downstream of the tone generator (60) in order to deactivate the echo compensator (5).

2. Method according to claim 1,
**characterised in that**
besides the DTMF and switching-related tones, the tone generator (60) also generates the disabling tone.

3. Method according to claim 2,
**characterised in that**
the disabling tone generated by the tone generator (60) has a frequency f=2100 Hz.

4. Method according to one of claims 1 to 3,
**characterised in that**
the tone disablers (14.1, 14.2) carry out a signal level evaluation for controlling the echo compensator (5) and thus automatically identify the end of the data transmission.

5. Method according to one of claims 1 to 4,
**characterised in that**
the tone disabler (14.1) and the further tone disabler (14.2) are designed as one single unit.

6. Method according to one of claims 1 to 5,
**characterised in that**
the echo compensator (5) is deactivated for the duration of a data connection and that at the end of a data connection, the echo compensator (5), in the state as at the beginning of the data connection, as shown by the external echo compensation controller (4), is reset.

7. Method according to claim 6,
**characterised in that**
within a connection, voice is changed to data by means of tone disabling.

8. Media gateway (20), which is inserted between a circuit-switched network (TDM) and a packet-switched network (IP), having means (13, 14.1, 14.2, 60) for implementing the method according to one of claims 1 to 7.

## Revendications

1. Procédé de neutralisation de tonalité d'un compensateur d'écho (5) contenu dans une passerelle de média (20) intégrée entre un réseau à commutation de circuits (TDM) et un réseau à commutation de paquets (IP), la phonie et les données passant dans la bande vocale par l'intermédiaire de la passerelle de média (20),
- pour chaque liaison en direction du réseau à commutation de paquets (IP), la tonalité de neutralisation, détectée (3) comme une information, étant transmise à une commande de compensation d'écho (4) logée dans une passerelle de média (20) ;
- il est prévu, pour chaque liaison en direction du réseau à commutation de circuits (TDM), un analyseur de charge utile (13) logé dans la passerelle de média (20), afin d'acheminer le signal d'information codé à la commande du compensateur d'écho (4) pour la désactivation du compensateur d'écho (5) ;
**caractérisé en ce que**
- pour chaque liaison en direction du réseau à commutation de paquets (IP), il est prévu un neutraliseur par tonalité (14.1) logé dans la passerelle de média (20) pour la désactivation du compensateur d'écho (5) et **en ce que**
- pour chaque liaison en direction du réseau à commutation de circuits, un générateur de tonalité (60) est commandé par le signal d'information codé dans l'analyseur de charge utile (13) pour générer une tonalité de neutralisation et un autre neutraliseur par tonalité (14.2) logé dans la passerelle de média (20) est branché en aval du générateur de tonalité (60) afin de désactiver le compensateur d'écho (5).

2. Procédé selon la revendication 1,
**caractérisé en ce que**
le générateur de tonalité (60) génère aussi, outre les tonalités DTMF et de commutation, des tonalités de neutralisation.

3. Procédé selon la revendication 2,
**caractérisé en ce que**
la tonalité de neutralisation générée par le générateur de tonalité (60) présente une fréquence f = 2100 Hz.

4. Procédé selon l'une quelconque des revendications 1 à 3,
**caractérisé en ce que**
les neutralisateurs-de tonalité (14.1, 14.2) effectuent une analyse du niveau du signal pour commander le compensateur d'écho (5) et détectent ainsi de manière autonome la fin de la transmission de données.

5. Procédé selon l'une quelconque des revendications 1 à 4,
**caractérisé en ce que**
le neutraliseur par tonalité (14.1) et l'autre neutraliseur par tonalité (14.2) sont conçus comme une unité unique.

6. Procédé selon l'une quelconque des revendications 1 à 5,
**caractérisé en ce que**
pendant la durée d'une liaison de données, le compensateur d'écho (5) est désactivé et à la fin d'une liaison de données, le compensateur d'écho (5) est ramené dans l'état où il se trouvait au début de la liaison de données, comme indiqué par la commande de compensation d'écho (4) externe.

7. Procédé selon la revendication 6,
**caractérisé en ce que**
pendant une liaison, le passage de la phonie aux données s'effectue par l'intermédiaire de la neutralisation de tonalité.

8. Passerelle de média (20) qui est insérée entre un réseau à commutation de circuits (TDM) et un réseau à commutation de paquets (IP), comprenant des moyens (13, 14.1, 14.2, 60) pour la mise en oeuvre du procédé selon l'une quelconque des revendications 1 à 7.
